# EUROPEAN PATENT APPLICATION

(11) **EP 4 455 934 A1**
(43) Date of publication of application: **30.10.2024**
(21) Application number: 24169545.1
(22) Date of filing: 10.04.2024
(51) Int. Cl.: G06K 19/07

(54) **LOCATION DETECTION AND TRACKING USING AMBIENT ELECTROMAGNETIC POWER HARVESTING**

(30) Priority: 25.04.2023 US 202318306934
(71) Applicant: T-Mobile Innovations LLC, Overland Park, KS 66251 (US)
(72) Inventor: BALMAKHTAR, Marouane, Fairfax, 22030 (US); HOU, Pei, Centerville, 20120 (US); PACZKOWSKI, Lyle W., Mission Hills, 66208 (US); PERLOW, Harry W., Palm Harbor, 34683 (US)
(74) Representative: Suddaby, Mark Edward

(57) **Abstract**

A system for ambient electromagnetic power harvesting (AEPH) chip location detection and tracking comprises an AEPH chip and a reader device. The AEPH chip comprises antennas configured to receive radio frequency waves from a cell site associated with a carrier network, rectifier circuits coupled to the one or more antennas configured to convert the radio frequency waves into power as a direct current voltage, a power storage coupled to the one or more rectifiers circuits configured to store the power, and a transceiver coupled to the power storage and configured to broadcast an identification signal using the power stored in the power storage in response to receiving the radio frequency waves from the cell site. The reader device comprises a transceiver configured to receive the identification signal from the AEPH chip, and processors coupled to the transceiver and configured to obtain a location of the AEPH chip.

## Description

### CROSS-REFERENCE TO RELATED APPLICATIONS

None.

### STATEMENT REGARDING FEDERALLY SPONSORED RESEARCH OR DEVELOPMENT

Not applicable.

### REFERENCE TO A MICROFICHE APPENDIX

Not applicable.

### BACKGROUND

Radio frequency identity (RFID) chips conventionally are small inexpensive semiconductor devices that may not have on-board power. When irradiated with an appropriate electromagnetic field, the RFID chip draws power from the energy in the electromagnetic field and wirelessly transmits an identity via a radio frequency. RFID chips may be coupled to or sewn into clothing. RFID chips may be embedded in or adhered to products. Special scanning or reading devices may be used to stimulate the RFID chips with an electromagnetic field, read the identity broadcast by the RFID chips, and provide this identity back to a computer that the scanning or reading device is communicatively coupled to. Conventional RFID chips may be used in inventory control systems and in other applications.

### SUMMARY

In an embodiment, a system for ambient electromagnetic power harvesting (AEPH) chip location detection and tracking is disclosed. The system comprises an AEPH chip and a reader device. The AEPH chip comprises one or more antennas configured to receive radio frequency waves from a cell site associated with a carrier network, wherein the cell site is positioned at least one mile away from the AEPH chip, and wherein an object is coupled to the AEPH chip, one or more rectifier circuits coupled to the one or more antennas configured to convert the radio frequency waves into power as a direct current voltage, a power storage coupled to the one or more rectifiers circuits configured to store the power, and a transceiver coupled to the power storage and configured to broadcast an identification signal using the power stored in the power storage in response to receiving the radio frequency waves from the cell site. The reader device comprises a transceiver configured to receive the identification signal from the AEPH chip, and one or more processors coupled to the transceiver and configured to obtain a location of the AEPH chip. The transceiver is further configured to transmit the location of the AEPH chip to a carrier network.

In another embodiment, a method of ambient electromagnetic power harvesting (AEPH) chip location detection and tracking is disclosed. The method comprises transmitting, by a client application at a user equipment, a request for a location of an object to a carrier network, in which the object is coupled to the AEPH chip. The method further comprises receiving, by one or more antennas of the AEPH chip, radio frequency waves from a cell site associated with a carrier network after the request for the location of the object is transmitted to the carrier network, in which the cell site is positioned at least one mile away from the AEPH chip. The method further comprises converting, by one or more rectifier circuits of the AEPH chip, the radio frequency waves into power having a direct current voltage, storing the power in a power storage of the AEPH chip, broadcasting, by the AEPH chip, an identification signal using the power stored in the power storage in response to receiving the radio frequency waves from the cell site, receiving, by a reader device, the identification signal from the AEPH chip, and forwarding, by the reader device to a location server, at least a portion of the identification signal to determine a location of the AEPH chip. The location of the AEPH chip is transmitted to the user equipment as the location of the object.

In yet another embodiment, a method of ambient electromagnetic power harvesting (AEPH) chip location detection and tracking are disclosed. The method comprises receiving, by one or more antennas of the AEPH chip, radio frequency waves from a cell site associated with a carrier network after a request for a location of an object is transmitted to the carrier network, in which the cell site is positioned at least one mile away from the AEPH chip. The method further comprises converting, by one or more rectifier circuits of the AEPH chip, the radio frequency waves into power as a direct current voltage, storing the power in a capacitor of the AEPH chip, and broadcasting, by the AEPH chip, an identification signal using the power stored in the capacitor in response to receiving the radio frequency waves from the cell site. The method further comprises receiving, by a reader device, the identification signal from the AEPH chip, determining, by the reader device, a location of the AEPH chip, and transmitting, by the reader device to a user equipment, the location of the AEPH chip as the location of the object.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1 is a block diagram of a system according to an embodiment of the disclosure.
FIG. 2 is a message sequence diagram illustrating a method of detecting a location of an ambient electromagnetic power harvesting (AEPH) chip according to various embodiments of the disclosure.
FIG. 3 is a diagram illustrating an example of AEPH chip location detection and tracking according to various embodiments of the disclosure.
FIG. 4 is a flow chart of a method according to an embodiment of the disclosure.
FIG. 5 is a flow chart of another method according to an embodiment of the disclosure.
FIG. 6A and FIG. 6B are a block diagram of a 5G communication network according to an embodiment of the disclosure.
FIG. 7 is a block diagram of a computer system according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

Currently, there are two primary methods of location tracking using RFID chips, including a passive RFID tracking method and an active RFID tracking method. Both methods of location tracking may include embedding an RFID tag in various objects of a business enterprise. For example, the objects may include employee badges, inventory items or boxes of items, employer assets (e.g., personal computers, laptops, mobile phones, etc.), retail items (e.g., retail security tags), etc. In this way, the RFID chip may be used to track employees, inventory items, employer assets, other retail items, etc.

A passive RFID tracking method involves the use of a passive RFID tag, which may include a chip and an antenna, but does not include a battery, keeping the cost of manufacturing and maintaining the passive RFID tag low. The passive RFID tag draws power from the energy in radio frequency signals received from a contactless RFID reader to activate the passive RFID tag to operate. In this way, the passive RFID tag may operate with a power storage unit, using the power obtained from the radio frequency signals. In contrast, an active RFID tracking method involves the use of an active RFID tag, which additionally includes a built-in power source (e.g., battery), in which the power for operating the tag is provided by the power source. Unlike the passive RFID tag, the active RFID tag can broadcast a signal autonomously, without the need for a reader. Since active RFID tags include a power supply, active RFID tags are significantly more expensive to manufacture and maintain. While active RFID tracking is suitable for location detection at up to 200 meters (M) from the active RFID tag, passive RFID tracking may only perform location detection at up to 15 meters (m) from the passive RFID tag. In addition, active RFID tags may have a longer read range than passive RFID tags due to the stronger power source in the active RFID tags.

The passive RFID and active RFID tracking methods may operate on different frequency bands. The active RFID tracking may operate on a 2.4 GHz or 433 MHz Industrial, Scientific and Medical (ISM) frequency band. Meanwhile, the passive RFID tracking may operate on 860-925 MHz ISM frequency band. RFID tracking methods typically operate at low frequencies, for example, from 30-500 KHz, 3-30 MHz, or 300-960 MHz. In other words, RFID tracking methods do not operate on higher frequency bands, for example, higher than 960 MHz.

However, the most cost-effective methods of RFID location tracking involve the use of short-range RFID tags that communicate over low frequencies and are only able to send and receive signals over short distances (e.g., up to 15 m). While a power source may be added to an RFID tag to increase the range of operation and eliminate the need to use a reader device, the addition of the power source significantly increases the cost of production of the RFID tag.

The present disclosure addresses the foregoing technical problems by providing a technical solution in the technical field of location detection and tracking using ambient electromagnetic power harvesting (AEPH) chips. The AEPH chip disclosed herein is configured to receive radio frequency waves emitted by a cell site (e.g. cell tower) associated with a carrier network, instead of a separate reader device. The AEPH chip receives the radio frequency waves over a high frequency band (e.g., 47 GHz, which is much higher than the frequency bands used for the foregoing passive and active RFID location tracking). Higher frequencies provide more bandwidth, such that more radio frequency waves may be broadcasted by a cell tower in less time, to activate more AEPH chips in a shorter period of time. In addition, the cell site may be positioned more than one mile away from the AEPH chip, which is far greater than the short-range distance typically used for RFID tag activation and communication.

The radio frequency waves may form an electromagnetic field at or around the AEPH chip, such that the AEPH chip may draw power from the energy in the electromagnetic field. The AEPH chip may convert the radio frequency waves into power, which may be used to activate the chip and broadcast identification signals to one or more reader devices within a chip-to-reader range from the AEPH chip. The reader devices may determine a location of the AEPH chip, or an object coupled to the AEPH chip, based on information carried in the identification signal.

In an embodiment, an AEPH chip includes one or more antennas configured to receive radio frequency waves from one or more cell sites, each of which may be associated with respective carrier networks. The AEPH chip may be configured to receive radio frequency waves from cell sites that are positioned a relatively long distance away from the AEPH chip. For example, the cell site may be positioned up to several miles away from the AEPH chip, which, as mentioned above, is far greater than the short-range distance used for traditional RFID communication. The AEPH chip may also include one or more rectifier circuits, and other circuits as may be appreciated, to convert the radio frequency waves into power as a direct current (DC) voltage. The AEPH chip may store the power in an on-board power storage, such as, for example, a low-loss capacitor of the AEPH chip.

The AEPH chip may use the power stored in the power storage to broadcast identification signals to one or more reader devices positioned within a zone. A zone may be a geographic area associated with, for example, a business enterprise, an office, a construction site, a hospital, etc. In an embodiment, the AEPH chip may broadcast the identification signal immediately in response to receiving the radio frequency signals and storing the power. In another embodiment, the AEPH chip may only broadcast the identification signals according to a predetermined broadcast schedule, which may be set by an operator of the AEPH chip.

The identification signal may be broadcasted to announce the presence of the AEPH chip to one or more reader devices within a distance range of the AEPH chip. A reader device may be a low-cost, low-power device positioned within the zone and configured to receive the identification signals from the AEPH chips. In an embodiment, the reader device may include two interfaces, a radio frequency interface by which to interface with the AEPH chips, and a wide area network interface, such as Ian EEE 802.11 or 802.3 interface, to communicate with the carrier network and location server. The reader device may communicate with the carrier network via the cell site.

In an embodiment, the reader device may be a low-profile device with just enough power and resources to communicate with the carrier network, location server, and the AEPH chips. Alternatively, the reader device may be a more powerful device, such as a personal computer, handheld device, or even an edge computing device.

In an embodiment, an identification signal may be a packet including an identifier of the AEPH chip associated with an object and/or an identifier of the object. The identification signal may include other data, such as, for example, a status of the beacon (e.g., temperature, power storage, etc.), uniform resource locator (URL), time of arrival of the broadcast signal from the cell site at the AEPH chip, an identification of the cell site from which the broadcast signal was received, time of sending the identification signal from the AEPH chip to the reader device, and/or any other information that may be used to identify the AEPH chip and/or object and determine a location of the AEPH chip.

In some cases, an AEPH chip may be coupled to (affixed to, embedded within, or stitched to) an object associated with the business enterprise or organization associated with the zone. For example, if the zone is associated with a construction site, then the AEPH chip may be fixed to one or more construction tools, construction materials, supplies, or boxes of tools and supplies. Each of these objects may be associated with a respective AEPH chip, and a location server may store mappings between an identifier of the object and an identifier of the respective AEPH chip.

In an embodiment, a user, having a user equipment (UE) registered with a carrier network associated with the cell site, may enter the zone and request a location of a particular construction tool (i.e., object) via the UE. The request may include an identifier of the object and/or an identifier of the AEPH chip associated with the chip, and then UE may forward the request to the carrier network and/or to one or more reader devices in the zone via the cell site.

The reader device may then be triggered to listen for identification signals received from an AEPH chip associated with the object. The reader device may also send instructions to other reader devices in the zone to listen for identification signals received from the AEPH chip coupled to the object. The reader devices may then wait to receive an identification signal from the AEPH chip based on whether the identification signal includes an identifier of the object and/or the location of the AEPH chip.

The reader device may obtain the location of the object, and thus the location of the corresponding AEPH chip, based on the identification signal. In one embodiment, the reader device may determine the location of the AEPH chip. In another embodiment, the reader device may forward the identification signal to a location server, and then location server may determine the location of the AEPH chip.

In an embodiment in which the reader device determines the location of the AEPH chip, the reader device may use one or more known methods of location determination, as should be appreciated. For example, the reader device may determine the location of the AEPH chip using trilateration, multi-lateration, and/or based on attributes of the identification signal (e.g., time of arrival, time delay, signal strength, power signal delay, round trip times, etc.). Similarly, the reader device may use the known location of the reader device and/or the known location of one or more cell sites that are within range of the AEPH chip with the attributes of the identification signal to determine the location of the AEPH chip. In another case, the reader device may use signal strengths to determine the location of the AEPH chip based on the signal strength values being associated with a distance to between AEPH chip and the reader device.

In another embodiment in which the location server determines the location of the AEPH chip, the reader device may first forward at least a portion of the identification signal to the location server. The location server may maintain information regarding known locations of reader devices within the zone. The location server may wait to receive multiple identification signals related to the AEPH chip from multiple reader devices. The location server may then use the information carried in the identification signals, the known locations of the reader devices, the known location of one or more cell sites that are within range of the AEPH chip, and/or other attributes of the identification signal to determine a location of the AEPH chip.

By comparing, contrasting, and combining the data received from multiple reader devices regarding the same AEPH chip, the location server may determine the location of the AEPH chip in a more accurate and fine-tuned manner. For example, the location server may determine a different location of the AEPH chip based on the data received from each of the different reader devices, and then the location server may determine the most accurate one of the different locations of the AEPH chip. For example, the location server may filter out outlier or inaccurate data (e.g., abnormal round-trip times and delays) to ensure that the most accurate and relevant data is used to determine the location of the AEPH chip. In an embodiment, the location server may determine location of the AEPH chip based on an average or center point of the different calculated or estimated locations of the AEPH chip. In this way, the use of multiple identification signals received by several different reader devices to locate a single AEPH chip serves to further contribute to the accuracy of determining the location of the AEPH chip.

Accordingly, the embodiments disclosed herein enable a lower cost AEPH chip to be used for object location detection and tracking, in which a short distance reader is not needed. Instead, the AEPH chip may be activated in response to receiving radio frequency signals on a high frequency from a cell site, which may be positioned multiple miles away. Therefore, the lower cost AEPH chip disclosed herein may store power in a capacitor or other on-board energy storage device in a faster and more efficient manner. In addition, the reader devices and/or the location server may determine a location of the AEPH chip using the data in the identification signal and attributes of the identification signal. Since a minimal amount of data is transmitted in the identification signal (i.e., only an identifier of the AEPH chip and other control data may be included in the identification signal), the embodiments disclosed herein minimize the amount of the data that has to be communicated through the network to determine the location of the AEPH chip. Therefore, the method of location detection disclosed herein using AEPH chips and high frequency radiation from cell sites for are far more power efficient and network efficient compared to prior methods of location detection using RFID tags.

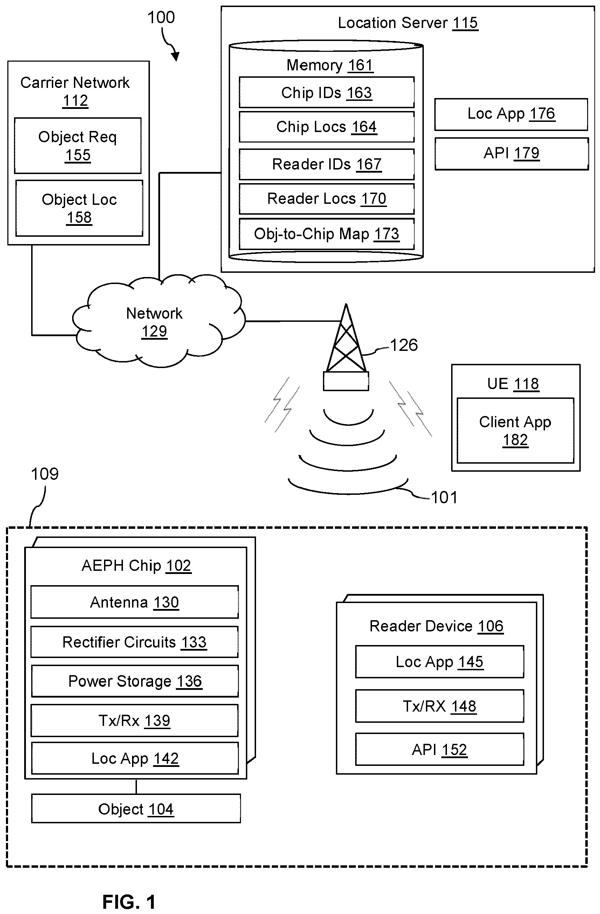

Turning now to FIG. 1, a communication system 100 is described. In an embodiment, the system 100 comprises an AEPH chip 102, an object 104, and one or more reader devices 106 positioned within a zone 109. The system 100 also comprises a carrier network 112, a location server 115, a UE 118, a cell site 126, and a network 129. The reader device 106 may communicate with the carrier network 112, the location server 115, the UE 118, and then network 129 via the cell site 126. The carrier network 112, location server 115, and the UE 118 may communicate with the reader device 106 via the cell site 126. The AEPH chip 102 may communicate with the reader device 106 via a radio frequency interface or a short distance coupling mechanism by which energy may be transferred between the AEPH chip 102 and the reader device 106. For example, the coupling mechanism may be inductive coupling, capacitive coupling, or backscatter coupling.

The cell site 126 (also sometimes referred to herein as a "cell tower") may provide the AEPH chips 102 and reader devices 106 a wireless communication link to the carrier network 112, location server 115, and UE 118 according to a 5G, a long term evolution (LTE), a code division multiple access (CDMA), or a global system for mobile communications (GSM) wireless telecommunication protocol. Similarly, the cell site 126 may provide the carrier network 112, location server 115, and UE 118 a wireless communication link to one another according to a 5G, a LTE, a CDMA, or a GSM wireless telecommunication protocol.

The cell site 126 may be a macro cell site, or a small cell site, including antennas and other electronic communications equipment to create one or more macro cells or small cells. The cell site 126 may emit ambient radio frequency waves 101, for example, in the form of a low-power or high-power ambient electromagnetic power field. The ambient radio frequency waves 101 may comprise radio emissions in a variety of different frequency bands, including high frequency bands, for example, about 960 MHz frequency or higher. In one embodiment, the cell site 126 may emit radio frequency waves 101 at about a 47 GHz frequency band.

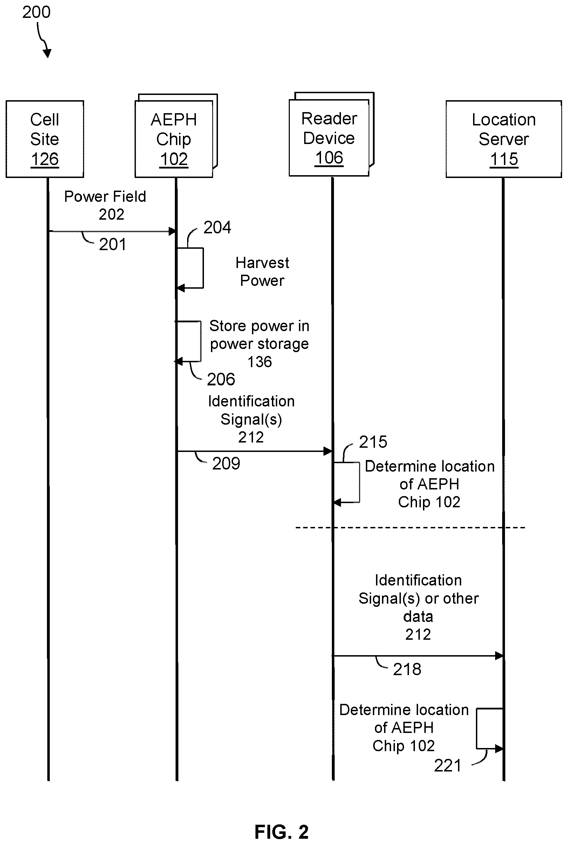

The AEPH chip 102 includes one or more antennas 130, a power storage 136, a location application 142, one or more rectifier circuits 133, and a transceiver 139 (shown as "Tx/Rx" in FIG. 1). The one or more antennas 130, also sometimes referred to as rectifying antennas, may be highly efficient, high-gain antennas configured to detect and receive the low-power ambient electromagnetic power field including the radio frequency waves 101. The rectifier circuits 133 may be circuits configured to convert the received ambient radio frequency waves into power as a direct current (DC) voltage. The power storage 136 may be configured to store the power generated by the rectifier circuit 133. In an embodiment, the power storage 136 may be a capacitive antenna. In another embodiment, the power storage 136 may be a battery. The transceiver 139 may be configured to receive and transmit data. The location application 142 may be an application, based on instructions stored on a memory of the AEPH chip 102. The instructions, when executed, may cause the location application 142 to perform at least some of the steps of methods 200, 400, and 500 of FIGS. 2, 4, and 5. For example, the location application 142 may be configured to generate and broadcast an identification signal to one or more reader devices 106 within the zone 109.

An object 104 may be located and tracked within the zone 109. The zone 109 may be a geographic area associated with, for example, a business enterprise, an office, a construction area, a hospital, etc. The object 104 may be a physical, tangible object to which the AEPH chip 102 may be coupled. For example, when the zone 109 is a business office, the objects 104 may be business devices, such as personal computers and handheld devices. When the zone 109 is a hospital, the objects 104 may be medical equipment or devices, or even different components of the medical equipment or devices. When the zone 109 is a construction site, the objects 104 may be construction tools, construction materials, supplies, or boxes of tools or supplies. When the zone 109 is a warehouse, the objects 104 may be inventory items.

The reader device 106 may comprise a location application 145, a transceiver 148 (shown as "Tx/Rx" in FIG. 1), and one or more application programming interfaces 152. The location application 145 may be an application, based on instructions stored on a memory of the reader device 106. The instructions, when executed, may cause the location application 145 to perform at least some of the steps of methods 200, 400, and 500 of FIGS. 2, 4, and 5. For example, the location application 145 may be configured to determine a location of the AEPH chip 102. The transceiver 148 may be a transceiver configured to receive and transmit data. The API 152 may be an interface by which the reader device 106 may communicate with the carrier network 112 and/or the location server 115.

The carrier network 112 may be a network associated with a telecommunications carrier and including a radio access network (RAN) and a core network. The RAN may include the access network containing the radio elements of a cell network, and the core network may include the elements that manage the subscriber information, call setup and routing, and related system supports. In an embodiment, the core network may be an evolved packet core (EPC) core network. The core network may be configured to implement a 5G, a LTE, a CDMA, or a GSM wireless telecommunication protocol. In one embodiment, the core network may be a 3rd Generation Partnership Project (3GPP) Evolved Packet System (EPS).

While FIG. 1 shows the reader device 106 and the UE 118 connected to the network 129 and the carrier network 112 via the cell site 126, it should be appreciated that the reader device 106 and UE 118 may be connected to the network 129 and the carrier network 112 via another non-3GPP access network or connection. In another case, the system may further include a local area network (LAN) and/or WiFi connectivity using one or more wireless access points, and the reader device 106 and UE 118 may be connected to the network 129 and the carrier network 112 via the LAN and/or the wireless access points.

As shown in FIG. 1, the carrier network 112 may maintain object requests 155 and object locations 158. The object requests 155 may be requests received from one or more UEs 118 for a location of an object 104 within the zone 109. An object request 155 may include an identifier of the object 104 for which a location has been requested. The object location 158 may be an actual location of the object 104, which may be determined by the reader device 106 or the location server 115 according to the embodiments disclosed herein, and returned to the carrier network 112 for storage and transmission back to the UE 118.

The location server 115 may be a server or collection of servers including processors, memories, and networking resources. For example, the location server 115 may be stored across one more data centers and implemented as a cloud data storage and processing system. The location server 115 may be part of the carrier network 112 or separate from the carrier network 112. The location server 115 may store chip identifiers 163, chip locations 164, reader identifiers 167, reader locations 170, and/or object-to-chip mappings 173 across one or more memories 161. The chip identifiers 163 may include one or more identifiers identifying different AEPH chips 102 within a zone 109. For example, the chip identifiers 163 may be alphanumeric values uniquely identifying the AEPH chips 102. The chip locations 164 may include the location of one or more AEPH chips 102, which may be stored as latitude-longitude coordinates. However, it should be appreciated that the chip locations 164 may otherwise be encoded in any other format indicative of the location of the AEPH chip 102. For example, the chip locations 164 may be encoded as a WHAT 3 WORDS location, an address, or any other format indicative of the location of the AEPH chip 102. In an embodiment, the chip location 164 of an AEPH chip 102 may be stored in association with a chip identifier 163 of the AEPH chip 102. The reader identifiers 167 may include one or more identifiers identifying different reader devices 106 within a zone 109. For example, the reader identifiers 167 may be alphanumeric values uniquely identifying the reader devices 106. The reader locations 170 may include the locations of one or more reader devices 106 in the zone 109. The reader locations 170 may be encoded as latitude-longitude coordinates, or any other format indicative of the location of a reader device 106. In an embodiment, the reader location 170 of a reader device 106 may be stored in association with a reader identifier 167 of the reader device 106. The object-to-chip mappings 173 may be mappings or associations between an identifier of the object 104 and a chip identifier 163 of the AEPH chip 102 coupled to the object 104.

The location server 115 may also run a location application 176, and include one or more APIs 179. The location application 176 may be an application, based on instructions stored on a memory 161 of the location server 115. The instructions, when executed, may cause the location application 176 to perform at least some of the steps of methods 200, 400, and 500 of FIGS. 2, 4, and 5. For example, the location application 176 may be configured to determine a location of the AEPH chip 102, and store the location in the chip locations 164. The API 179 may be an interface by which the location server 115 may communicate with the carrier network 112 and/or the reader devices 106.

The UE 118 may be a device registered with the carrier network 112 under a subscription account. For example, the UE 118 may be a cell phone, a mobile phone, a smart phone, a personal digital assistant (PDA), an Internet of things (loT) device, a wearable computer, a headset computer, a laptop computer, a tablet computer, a notebook computer, a medical monitoring device, a vehicle computer, etc. The UE 118 may include a client application 182, by which a user may enter details for the object request 155. For example, the client application 182 may present a user interface with text boxes or drop-down menus by which the user may enter details regarding the object 104 for which a location is requested. For example, the user may enter an identifier of the object 104 for which to request the location in the user interface presented by the client application 182.

The network 129 may be one or more private networks, one or more public networks, or a combination thereof. While FIG. 1 shows the carrier network 112 and the location server 115 as being separate from the network 129, it should be appreciated that, in some embodiments, at least a portion of the carrier network 112 and the location server 115 may be part of the network 129. The operation of the component parts shown in system 100 will be further described below.

Turning to FIG. 2, shown is a message sequence diagram illustrating method 200 of performing location detection and tracking of an AEPH chip 102 within a zone 109. In an embodiment, method 200 may be performed by the cell site 126, the AEPH chip 102, and one or more reader devices 106. In another embodiment, method 200 may additionally be performed by the location server 115. In an embodiment, method 200 may be performed after an operator has coupled an AEPH chip 102 to an object 104, and registered an object-to-chip mapping 173 between the object 104 and the AEPH chip 102 to the location server 115. For example, an operator may have registered the object-to-chip mapping 173 by providing a chip identifier 163 of the AEPH chip 102 and a corresponding object identifier of the object 104 upon which the AEPH chip 102 is fixed to the location server 115. The operator may additionally provide a current known location of the AEPH chip 102 and object 104 to the location server 115.

In an embodiment, method 200 may be performed after UE 118 has transmitted an object request 155 to the carrier network 112, in which the object request 155 includes an identifier of the object 104 to be located or tracked. In an embodiment, the carrier network 112 may forward the object request 155 to one or more reader devices 106 in the zone 109 in which the object 104 may be located. In this embodiment, the reader devices 106 may communicate with the location server 115 to fetch the chip identifier 163 associated with the object 104 in the object request 155 using the object-to-chip mappings 173. Alternatively, the carrier network 112 may transmit an instruction to the reader devices 105 in the zone 109 to perform location detection and tracking on the chip identifier 163 of the AEPH chip 102 indicated in the object request 155. When the carrier network 112 only sends the object request 155 to one reader device 106, the reader device 106 may forward the object request 155, or the instruction, to other reader devices 106 in the zone 109.

At step 201, a cell site 126 produces and emits an ambient electromagnetic power field 202 comprising ambient radio frequency waves 101 or radio emissions. For example, the radio frequency waves 101 may be in about a 47 GHz frequency band. The cell site 126 may emit the radio frequency waves 101 constantly, periodically, or even upon detecting a trigger event (e.g., receiving an object request 155 from a UE 118). When the cell site 126 emits the radio frequency waves 101 in response to detecting the trigger event, the cell site 126 may use beamforming to direct the radio frequency waves 101 to the zone 109, which is likely to include the AEPH chip 102 associated with the object 104 indicated in the object request 155.

The radio frequency waves 101 in the ambient electromagnetic power field 202 may transmit and be detectable at a tower-to-chip range from the cell site 126, in which the tower-to-chip range may be a distance spanning up to several miles. For example, the ambient electromagnetic power field 202 may be detectable, and thus used to harvest power, at least 1 mile away from the cell site 126.

One or more AEPH chips 102 may detect and receive the ambient electromagnetic power field 202 from the cell site 126. For example, one or more antennas 130 of the AEPH chips 102 may receive the radio frequency waves 101 from the ambient electromagnetic power field 202. In an embodiment, AEPH chips 102 may receive the radio frequency waves 101 at the 47 GHz spectrum band. However, it should be appreciated that the AEPH chips 102 may be configured to receive radio frequency waves 101 in other spectrum bands, and the AEPH chips 102 are not limited to receiving radio frequency waves in the 47 GHz spectrum band. The APEH chips 102 may be configured to harvest power using the radio frequency waves 101 in the electromagnetic power field 202. At step 204, the rectifier circuits 133 may convert the radio frequency waves 101 into power having a DC voltage. At step 206, the AEPH chip 102 stores the power in the power storage 136, which may be, for example, a capacitor or a capacitive antenna. At step 209, the AEPH chip 102 may generate and transmit an identification signal 212 to one or more reader devices 106 that are within a chip-to-reader range from the AEPH chip 102. The chip-to-reader range may be based on the amount of electromagnetic power received at the AEPH chip 102 and the interface by which the AEPH chip 102 and the reader devices 106 communicate. For example, the chip-to-reader range may be up to about 900 meters.

In an embodiment, the identification signal 212 may be used to announce the presence of the AEPH chip 102 to one or more reader devices 106 within the chip-to-reader range from the AEPH chip 102. In an embodiment, an identification signal 212 may be a packet including an identifier of the object 104 and/or a chip identifier 163 of the AEPH chip 102 coupled to the object 104. The identification signal 212 may include other data, such as, for example, a status of the AEPH chip 102 (e.g., temperature, power storage, etc.), time of arrival of the radio frequency waves 101 at the AEPH chip 102 from the cell site 126, an identification of the cell site 126 from which the radio frequency waves 101 was received at the AEPH chip 102, time of sending the identification signal 212 to the reader devices 106, and/or any other information that may be used to identify the AEPH chip 102 and/or object and determine a location of the AEPH chip 102.

In an embodiment, the reader devices 106 in the zone 109 may already be listening to retrieve an identification signal 212 from the AEPH chip 102 identified based on the object request 155. The reader devices 106 may detect and receive the identification signal 212 and determine whether the chip identifier 163 carried in the identification signal 212 matches the chip identifier 163 identified based on the object request 155. When the chip identifier 163 carried in the identification signal 212 matches the chip identifier 163 identified based on the object request 155, either one or more reader devices 106 or the location server 115 may be triggered to determine the location of the AEPH chip 102, and thus the location of the object 104 coupled to the AEPH chip 102.

In a first embodiment, one or more reader devices 106 may determine a location of the AEPH chip 102. In this first embodiment, at step 215, the reader device 106 may determine the location of the AEPH chip 102. The reader device 106 may use one or more different methods of location determination to determine the location of the AEPH chip 102, and the methods of location determination are not limited herein. For example, the reader device 106 may determine the location of the AEPH chip 102 using trilateration, multi-lateration, and/or based on the information carried in the identification signal 212 and attributes of the identification signal 212. For example, the attributes of the identification signal 212 may include a time of arrival of the identification signal 212 at the reader device 106, a time delay of receiving the identification signal 212 at the reader device 106, a signal strength of the identification signal 212, a round trip time of the identification signal 212, etc. For example, the reader device 106 may use the known location of the reader device 106, the known location of one or more cell sites 126 that are within range of the AEPH chip 102, and attributes of the identification signal 212 to determine the location of the AEPH chip 102.

In a second embodiment, the location server 115 may determine the location of the AEPH chip 102. In this second embodiment, at step 218, one or more reader devices 106 may forward the identification signal 212 or at least a portion of the data from the identification signal 212 to the location server 115. The one or more reader devices 106 may also forward attributes of the identification signal 212 and/or any other data that may be used to determine the location of the AEPH chip 102 to the location server 115. The location server 115 may use the received data to determine the location of the AEPH chip 102. For example, the portion of the data from the identification signal 212 received by the location server 115 may include the chip identifier 163 of the AEPH chip 102. For example, the attributes of the identification signal 212 may include time of arrival, time delay, signal strength, power signal delay, round trip times, etc. These attributes may be used with the known location of the reader device 106 and/or the known location of one or more cell sites 126 accessible by the reader device 106 to determine a location of the AEPH chip 102.

In a third embodiment, the location server 115 may receive a forwarded identification signal 212, at least a portion of the data from the identification signal 212, attributes of the identification signal 212, and/or any other data that may be used to determine the location of the AEPH chip 102 from multiple reader devices 102 within the chip-to-reader range of the AEPH chip 102. The location server 115 may use the data received from multiple reader devices 106 in conjunction with the known locations of the reader devices 106, the known location of one or more cell sites 126 that are within the tower-to-chip range of the AEPH chip 102, and/or other attributes of the identification signal 212 to determine a location of the AEPH chip 102. By comparing, contrasting, and combining the data received from multiple reader devices 106 that received an identification signal 212 from the same AEPH chip 102, the location server 115 may determine the location of the AEPH chip 102 in a more accurate and fine-tuned manner.

The location server 115 may determine a more accurate location of the AEPH chip 102 in a variety of different manners. In an embodiment, the location server 115 may average the calculated or estimated locations received from the multiple reader devices 106 to determine the most accurate or likely location of the AEPH chip 102. In an embodiment, the location server 115 may discard outlier data received from one or more reader devices 106 to ensure that the most relevant and accurate data from the multiple reader devices 106 are used to determine the location of the AEPH chip 102. For example, the location server 115 may receive data from multiple reader devices 106 regarding an AEPH chip 102, but the data received from two reader devices 106 may include outlier data because the data received from the two reader devices 106 indicate locations that are fairly different relative to the location indicated by the data received from the other reader devices 106. In this case, the location server 115 may not use the outlier data from the two reader devices 106 when determining the location of the AEPH chip 102. In an embodiment, the location server 115 may determine the location of the AEPH chip 102 based on a center location point determined from the data received from the multiple reader devices 106. In an embodiment, the location server 115 may determine a location of the AEPH chip 102 based on whether at least a threshold quantity of reader devices 106 transmit data to the location server 115 indicating that the AEPH chip 102 is located at a particular location. As should be appreciated, the manner in which the location server 115 determines the most accurate and likely location of the AEPH chip 102. At step 221, the location server 115 may determine the location of the AEPH chip 102 based on the data received from one or more reader devices 106.

Regardless of whether the reader device 106 or the location server 115 determines the location of the AEPH chip 102, the determined location of the AEPH chip 102 may be forwarded to the location server 115 or the carrier network 112 via the cell site 126. The location of the AEPH chip 102 may be stored as a chip location 164 in the location server 115 or stored as an object location 158 in the carrier network 112. When the location of the AEPH chip 102 is only forwarded to the location server 115, the location server 115 may forward the location of the AEPH chip 102 to the carrier network 112. Alternatively, when the location of the AEPH chip 102 is only forwarded to the carrier network 112, the carrier network 112 may forward the location of the AEPH chip 102 to the location server 115. The carrier network 112 and/or the location server 115 may store the location of the AEPH chip 102 and then forward the location of the AEPH chip 102 back to the UE 118 in response to the UE 118 transmitting the object request 155.

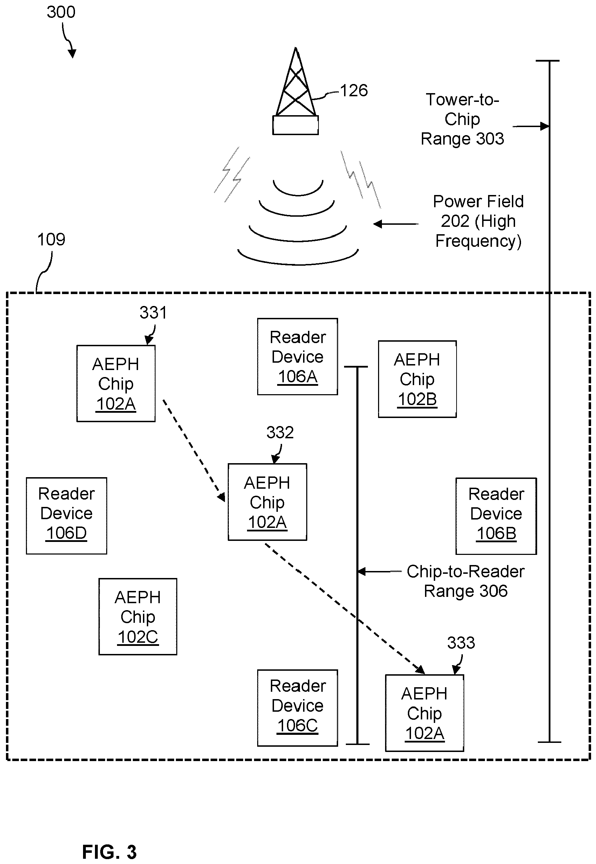

Moving on to FIG. 3, shown is a diagram illustrating an example of method of location detection and tracking using the AEPH chip 102 in the system 300. System 300 is similar to system 100 in that system 300 also includes the cell site 126 emitting an ambient electromagnetic power field 202 comprising radio frequency waves 101 at a high frequency (e.g., in about a 47 GHz frequency band) into a zone 109.

The zone 109 in system 300 includes multiple AEPH chips 102A-C coupled to respective different objects 104 and multiple reader devices 106A-D. In the example shown in FIG. 3, the zone 109 may correspond to a construction site, and multiple reader devices 106A-D may be positioned throughout the zone 106A-D. While FIG. 3 shows only four reader devices 106A-D positioned throughout the zone 109, it should be appreciated that any number of reader devices 106A-D may be positioned throughout the zone 109. Similarly, while FIG. 3 shows the reader devices 106A-D positioned at the outer edges of the zone 109, it should be appreciated that the reader devices 106A-D may be positioned anywhere in the zone 109.

As shown in FIG. 3, the cell site 126 may emit radio frequency waves 101 in the power field 201 over a tower-to-chip range 303. The tower-to-chip range 303 may depend on, for example, the equipment at the cell site 126 and the configuration or programming at the cell site 126. The stronger the power at the cell site 126, the longer the tower-to-chip range 303 by which the radio frequency waves 101 may travel to be detectable by AEPH chips 102A-C. For example, the tower-to-chip range 303 may be up to several miles long. In other cases, the tower-to-chip range 303 may be less than a mile, which may or may not be substantially more than normal. The tower-to-chip range 303 may vary based on the area being covered. For example, the tower-to-chip range 303 may be greater than or equal to a mile in the open country, and greater than a predefined number of yards in the city. In other words, the tower-to-chip range 303 may be greater in the country compared to the city, which may include more densely spaced cell sites 126. The tower-to-chip range 303 may also be based on the number of interfering elements between the cell site 126 and the AEPH chips 102A-C, in which the interfering elements may be walls, buildings, foliage, etc. that may block the signals propagating toward the AEPH chips 102A-C. Meanwhile, FIG. 3 also shows that reader devices 106A-D may detect signals from AEPH chips 102A-C that are a chip-to-reader range 306 away from the reader device 106A-D. For example, the chip-to-reader range 306 may be several hundred meters long, or even several miles long. The chip-to-reader range 306 may be based on the amount of power available at the AEPH chip 102 to transmit identification signals 212 at the AEPH chips 102A-C.

Continuing with the construction zone 109 example of FIG. 3, each reader device 106A-D may be positioned within the chip-to-reader range 306 such that each reader device 106A-D may detect identification signals from any one of the AEPH chips 102A-C in the zone 109. When a distance between the AEPH chip 102A-C and a reader device 106A-D exceeds the chip-to-reader range 306, then the reader device 106A-D may not be able to detect an identification signal 212 sent by the AEPH chip 102A-C.

In an embodiment, system 300 may also be able to perform location detection and tracking on a moving AEPH chip 102A. As shown by the dashed arrows in FIG. 3, the AEPH chip 102A may move to three different locations 331-333 within the zone 109 over time. First, the AEPH chip 102A may be positioned at location 331, then move to location 332, and then again move to location 333, all three locations 331-333 are within the chip-to-reader range of one or more reader devices 106, and thus, detectable by the reader devices 106A-D. Using the methodologies described herein, the reader devices 106A-D may still obtain the locations 331-333 of the moving AEPH chip 102 every time an identification signal 212 is received or periodically according to a schedule. For example, the AEPH chip 102A may emit an identification signal 212 periodically according to a predetermined schedule (e.g., every minute or every second). The reader devices 106A-D or the location server 115 may determine the location 331-333 of the AEPH chip 102A every time an identification signal 212 has been received from the AEPH chip 102A, and thus be able to determine whether the location 331-333 of the AEPH chip 102A has moved based on whether the determined location 331-333 is the same or different from the location 331-333 previously calculated. The location 331-333 of the AEPH chip 102A may be determined and stored at the location server 115 and/or carrier network 112 according to the embodiments described above.

In an embodiment, the reader devices 106A-D and/or location server 115 may detect when suspicious movement of an AEPH chip 102A is occurring based on various policies that may be stored at the reader device 106A-D or the location server 115. For example, a policy may indicate that two objects 104, and thus the corresponding AEPH chips 102A-E, are typically located together or belong together. For example, when the zone is a hospital, an AEPH chip 102A-E is positioned on an ultrasound machine while another AEPH chip 102A-E is positioned on the transducer of the ultrasound machine. A policy may indicate that the ultrasound machine and the transducer should generally be located together, and thus, the corresponding AEPH chips 102A-E should be located in the same vicinity. In this case, if one of the AEPH chips 102A-E appears to move while the other one remains stationary, this movement may be marked as suspicious. Users or operators may be alerted to suspicious movements of such objects 104. For example, the carrier network 112 or the location server 115 may send a notification to the UE 118 including a location 331-333 of the AEPH chip 102A-E or corresponding object 104, for display at the UE 118. The notification may indicate that the AEPH chip 102A-E or corresponding object 104 is moving suspiciously with a location 331-331 of the moving AEPH chip 102A-E.

The suspicious movement detection feature may also be used to determine whether an object 104 has been stolen, or is in the process of impermissibly moving out of the zone 109. This feature alerts the user of a potential stolen object 104, thereby increasing the chances of preventing the object 104 from leaving the zone 109 and saving the business enterprise in the costs of replacing the object 104.

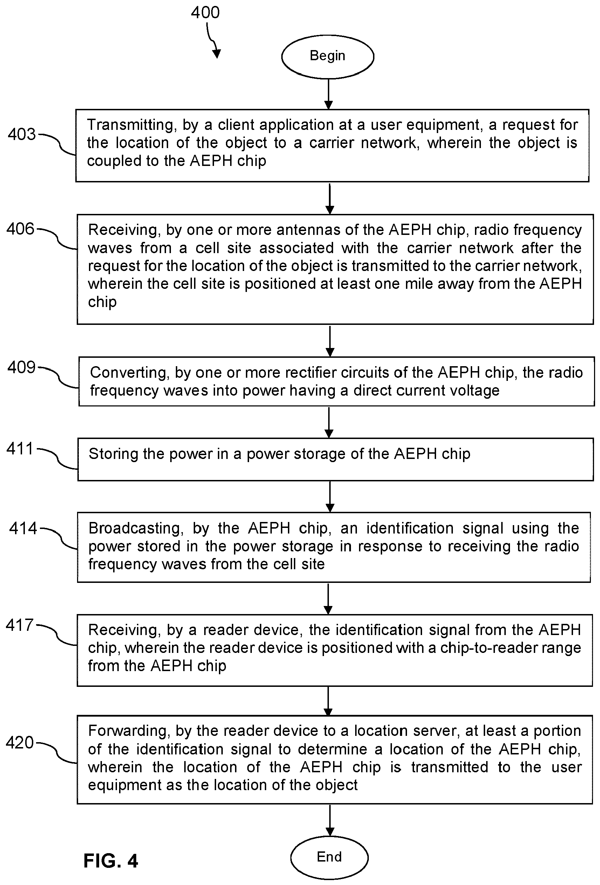

Turning now to FIG. 4, a method 400 for location detection and tracking is described. In an embodiment, method 400 may be performed by the AEPH chip 102, reader device 106, UE 118, and location server 115. In an embodiment, method 400 may be performed after an operator has coupled an AEPH chip 102 to an object 104, and registered an object-to-chip mapping 173 to the location server 115.

At step 403, method 400 comprises transmitting, by a client application 182 at a UE 118 to the carrier network 115, an object request 155, or a request for the location of the object 104. The object request 155 may include an identifier of the object 104 or the AEPH chip 102 coupled to the object 104.

At step 406, method 400 comprises receiving, by one or more antennas 130 of the AEPH chip 102, radio frequency waves 101 from a cell site 126 associated with the carrier network 112 after the object request 115 for the location of the object is transmitted to the carrier network 112. In an embodiment, the cell site 126 may be positioned at least one mile away from the AEPH chip 102.

At step 409, method 400 comprises converting, by one or more rectifier circuits 133, the radio frequency waves 101 into power harvesting a DC voltage. At step 411, method 400 comprises storing the power in a power storage 136 of the AEPH chip 102. The power storage 136 may be a capacitor, capacitive antenna, or even a small battery. At step 414, method 400 comprises broadcasting, by the AEPH chip, an identification signal 212 using the power stored in the power storage 136 in response to receiving the radio frequency waves 101 from the cell site 126. At step 417, method 400 comprises receiving, by a reader device 106 positioned within a chip-to-reader range 306 from the AEPH chip 102, the identification signal 212 from the AEPH chip 102. At step 420, method 400 comprises forwarding, by the reader device 106 to the location server 115, at least a portion the identification signal 212 to determine a location of the AEPH chip 102. In this embodiment, the location server 115 may determine the location of the AEPH chip 102 and transmit the location to the UE 118 as the location of the object 104.

In an embodiment, method 400 may include other characteristics and steps not otherwise shown in FIG. 4. In an embodiment, the location of the AEPH chip 102 may be based on known positions of one or more reader devices 106, known positions of the cell site 126, and round-trip delays of signals received by the one or more reader devices 106 from the AEPH chip. In an embodiment, the location of the AEPH chip 102 is based on data received from a plurality of readers 106 that received identification signals 212 from the AEPH chip 102, in which the data comprises round-trip delays of signals received the plurality of readers 106. In an embodiment, the radio frequency waves 101 are received by the AEPH chip 102 over a 47 GHz frequency band. In an embodiment, method 400 further comprises broadcasting, by the AEPH chip 102, the identification signal 212 periodically according to a predetermined schedule in response to receiving the radio frequency waves 101 from the cell site 126, or broadcasting, by the AEPH chip 102, the identification signal 212 only once in response to receiving the radio frequency waves 101 from the cell site 126. In an embodiment, method 400 further comprises storing, in a memory 161 at the location server 115, a mapping between an identifier of the object 104 and a chip identifier 163 of the AEPH chip 102 coupled to the object 104.

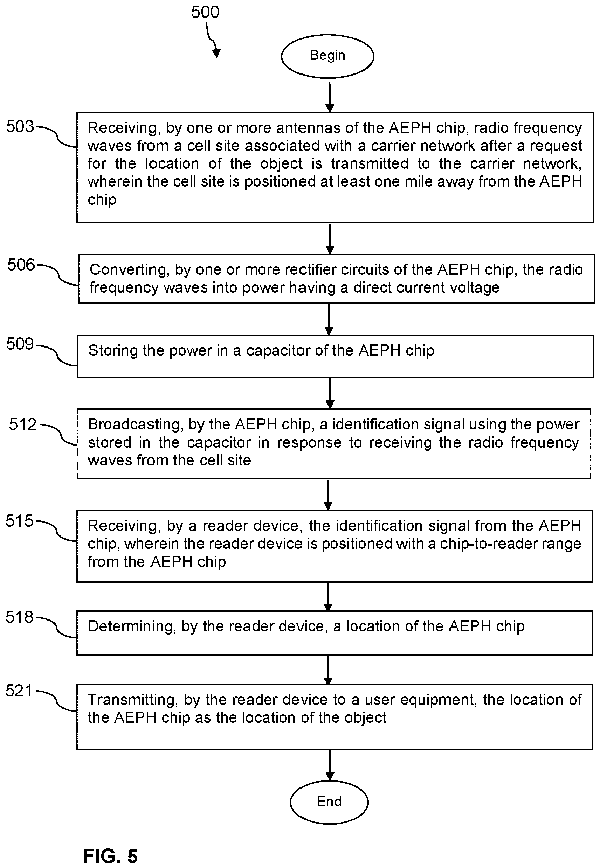

Turning now to FIG. 5, a method 500 for location detection and tracking is described. In an embodiment, method 500 may be performed by the AEPH chip 102, reader device 106, and location server 115. In an embodiment, method 500 may be performed after an operator has coupled an AEPH chip 102 to an object 104, and registered an object-to-chip mapping 173 to the location server 115. In an embodiment, method 500 may be performed after an object request 155 for an object 104 coupled to the AEPH chip 102 has been received from a UE 118.

At step 503, method 500 comprises receiving, by one or more antennas 130 of the AEPH chip 102, radio frequency waves 101 from a cell site 126 associated with the carrier network 112 after the object request 115 for the location of the object is transmitted to the carrier network 112. In an embodiment, the cell site 126 may be positioned at least one mile away from the AEPH chip 102.

At step 506, method 500 comprises converting, by one or more rectifier circuits 133, the radio frequency waves 101 into power having a DC voltage. At step 509, method 500 comprises storing the power in a capacitor of the AEPH chip 102. At step 512, method 500 comprises broadcasting, by the AEPH chip 102, an identification signal 212 using the power stored in the capacitor in response to receiving the radio frequency waves 101 from the cell site 126. At step 515, method 500 comprises receiving, by a reader device 106 positioned within a chip-to-reader range 306 from the AEPH chip 102, the identification signal 212 from the AEPH chip 102. At step 518, method 500 comprises determining, by the reader device 106, a location of the AEPH chip 102. At step 521, method 500 comprises transmitting, by the reader device 106 to a UE 118, the location of the AEPH chip 102 as the location of the object 104.

In an embodiment, method 500 may include other characteristics and steps not otherwise shown in FIG. 5. In an embodiment, the location of the AEPH chip 102 may based on known positions of one or more reader devices 102, known positions of the cell site 126, and round-trip delays of signals received by the one or more reader devices 106 from the AEPH chip 102. In an embodiment, the location of the AEPH chip 102 is based on data received from a plurality of readers 106 that received identification signals 212 from the AEPH chip 102, in which the data comprises round-trip delays of signals received by the plurality of readers 106 and/or signal strength values. In an embodiment, the radio frequency waves 101 are received by the AEPH chip 102 over a 47 GHz frequency band. In an embodiment, method 400 further comprises broadcasting, by the AEPH chip 102, the identification signal 212 periodically according to a predetermined schedule in response to receiving the radio frequency waves 101 from the cell site 126, or broadcasting, by the AEPH chip 102, the identification signal 212 only once in response to receiving the radio frequency waves 101 from the cell site 126.

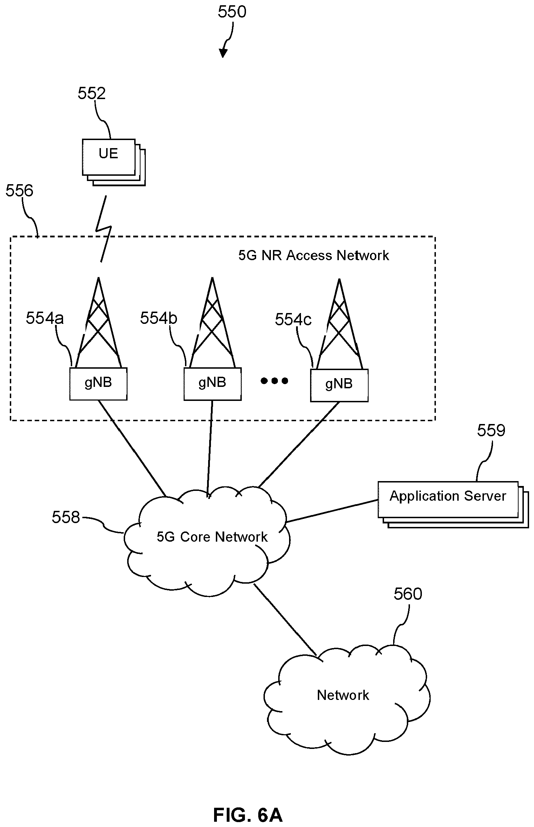

Turning now to FIG. 6A, an exemplary communication system 550 is described. In an embodiment, at least a portion of the network 129 described above is consistent with communication system 550. Typically the communication system 550 includes a number of access nodes 554 that are configured to provide coverage in which UEs 552 such as cell phones, tablet computers, machine-type-communication devices, tracking devices, embedded wireless modules, and/or other wirelessly equipped communication devices (whether or not user operated), can operate. The access nodes 554 may be said to establish an access network 556. The access network 556 may be referred to as a radio access network (RAN) in some contexts. In a 5G technology generation an access node 554 may be referred to as a gigabit Node B (gNB). In 4G technology (e.g., long term evolution (LTE) technology) an access node 554 may be referred to as an evolved Node B (eNB). In 3G technology (e.g., code division multiple access (CDMA) and global system for mobile communication (GSM)) an access node 554 may be referred to as a base transceiver station (BTS) combined with a base station controller (BSC). In some contexts, the access node 554 may be referred to as a cell site or a cell tower. In some implementations, a picocell, microcell, femtocell, etc., may provide some of the functionality of an access node 554, albeit with a constrained coverage area. Each of these different embodiments of an access node 554 may be considered to provide roughly similar functions in the different technology generations.

In an embodiment, the access network 556 comprises a first access node 554a, a second access node 554b, and a third access node 554c. It is understood that the access network 556 may include any number of access nodes 554. Further, each access node 554 could be coupled with a core network 558 that provides connectivity with various application servers 559 and/or a network 560. In an embodiment, at least some of the application servers 559 may be located close to the network edge (e.g., geographically close to the UE 552 and the end user) to deliver so-called "edge computing." The network 560 may be one or more private networks, one or more public networks, or a combination thereof. The network 560 may comprise the public switched telephone network (PSTN). The network 560 may comprise the Internet. With this arrangement, a UE 552 within coverage of the access network 556 could engage in air-interface communication with an access node 554 and could thereby communicate via the access node 554 with various application servers and other entities.

The communication system 550 could operate in accordance with a particular radio access technology (RAT), with communications from an access node 554 to UEs 552 defining a downlink or forward link and communications from the UEs 552 to the access node 554 defining an uplink or reverse link. Over the years, the industry has developed various generations of RATs, in a continuous effort to increase available data rate and quality of service for end users. These generations have ranged from "1G," which used simple analog frequency modulation to facilitate basic voice-call service, to "4G" - such as Long Term Evolution (LTE), which now facilitates mobile broadband service using technologies such as orthogonal frequency division multiplexing (OFDM) and multiple input multiple output (MIMO).

Recently, the industry has been exploring developments in "5G" and particularly "5G NR" (5G New Radio), which may use a scalable OFDM air interface, advanced channel coding, massive MIMO, beamforming, mobile mmWave (e.g., frequency bands above 24 GHz), and/or other features, to support higher data rates and countless applications, such as mission-critical services, enhanced mobile broadband, and massive Internet of Things (IoT). 5G is hoped to provide virtually unlimited bandwidth on demand, for example providing access on demand to as much as 20 gigabits per second (Gbps) downlink data throughput and as much as 10 Gbps uplink data throughput. Due to the increased bandwidth associated with 5G, it is expected that the new networks will serve, in addition to conventional cell phones, general internet service providers for laptops and desktop computers, competing with existing ISPs such as cable internet, and also will make possible new applications in internet of things (loT) and machine to machine areas.

In accordance with the RAT, each access node 554 could provide service on one or more radio-frequency (RF) carriers, each of which could be frequency division duplex (FDD), with separate frequency channels for downlink and uplink communication, or time division duplex (TDD), with a single frequency channel multiplexed over time between downlink and uplink use. Each such frequency channel could be defined as a specific range of frequency (e.g., in radio-frequency (RF) spectrum) having a bandwidth and a center frequency and thus extending from a low-end frequency to a high-end frequency. Further, on the downlink and uplink channels, the coverage of each access node 554 could define an air interface configured in a specific manner to define physical resources for carrying information wirelessly between the access node 554 and UEs 552.

Without limitation, for instance, the air interface could be divided over time into frames, subframes, and symbol time segments, and over frequency into subcarriers that could be modulated to carry data. The example air interface could thus define an array of time-frequency resource elements each being at a respective symbol time segment and subcarrier, and the subcarrier of each resource element could be modulated to carry data. Further, in each subframe or other transmission time interval (TTI), the resource elements on the downlink and uplink could be grouped to define physical resource blocks (PRBs) that the access node could allocate as needed to carry data between the access node and served UEs 552.

In addition, certain resource elements on the example air interface could be reserved for special purposes. For instance, on the downlink, certain resource elements could be reserved to carry synchronization signals that UEs 552 could detect as an indication of the presence of coverage and to establish frame timing, other resource elements could be reserved to carry a reference signal that UEs 552 could measure in order to determine coverage strength, and still other resource elements could be reserved to carry other control signaling such as PRB-scheduling directives and acknowledgement messaging from the access node 554 to served UEs 552. And on the uplink, certain resource elements could be reserved to carry random access signaling from UEs 552 to the access node 554, and other resource elements could be reserved to carry other control signaling such as PRB-scheduling requests and acknowledgement signaling from UEs 552 to the access node 554.

The access node 554, in some instances, may be split functionally into a radio unit (RU), a distributed unit (DU), and a central unit (CU) where each of the RU, DU, and CU have distinctive roles to play in the access network 556. The RU provides radio functions. The DU provides L1 and L2 real-time scheduling functions; and the CU provides higher L2 and L3 non-real time scheduling. This split supports flexibility in deploying the DU and CU. The CU may be hosted in a regional cloud data center. The DU may be co-located with the RU, or the DU may be hosted in an edge cloud data center.

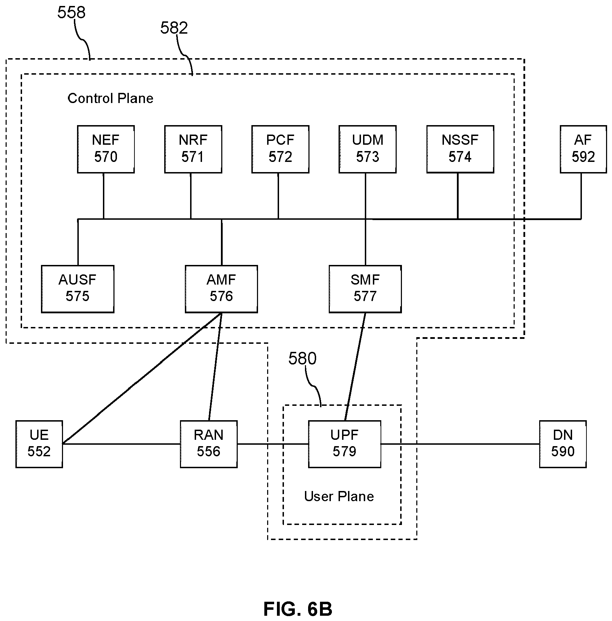

Turning now to FIG. 6B, further details of the core network 558 are described. In an embodiment, the core network 558 is a 5G core network. 5G core network technology is based on a service based architecture paradigm. Rather than constructing the 5G core network as a series of special purpose communication nodes (e.g., an HSS node, a MME node, etc.) running on dedicated server computers, the 5G core network is provided as a set of services or network functions. These services or network functions can be executed on virtual servers in a cloud computing environment which supports dynamic scaling and avoidance of long-term capital expenditures (fees for use may substitute for capital expenditures). These network functions can include, for example, a user plane function (UPF) 579, an authentication server function (AUSF) 575, an access and mobility management function (AMF) 576, a session management function (SMF) 577, a network exposure function (NEF) 570, a network repository function (NRF) 571, a policy control function (PCF) 572, a unified data management (UDM) 573, a network slice selection function (NSSF) 574, and other network functions. The network functions may be referred to as virtual network functions (VNFs) in some contexts.

Network functions may be formed by a combination of small pieces of software called microservices. Some microservices can be re-used in composing different network functions, thereby leveraging the utility of such microservices. Network functions may offer services to other network functions by extending application programming interfaces (APIs) to those other network functions that call their services via the APIs. The 5G core network 558 may be segregated into a user plane 580 and a control plane 582, thereby promoting independent scalability, evolution, and flexible deployment.

The UPF 579 delivers packet processing and links the UE 552, via the access network 556, to a data network 590 (e.g., the network 560 illustrated in FIG. 6A). The AMF 576 handles registration and connection management of non-access stratum (NAS) signaling with the UE 552. Said in other words, the AMF 576 manages UE registration and mobility issues. The AMF 576 manages reachability of the UEs 552 as well as various security issues. The SMF 577 handles session management issues. Specifically, the SMF 577 creates, updates, and removes (destroys) protocol data unit (PDU) sessions and manages the session context within the UPF 579. The SMF 577 decouples other control plane functions from user plane functions by performing dynamic host configuration protocol (DHCP) functions and IP address management functions. The AUSF 575 facilitates security processes.

The NEF 570 securely exposes the services and capabilities provided by network functions. The NRF 571 supports service registration by network functions and discovery of network functions by other network functions. The PCF 572 supports policy control decisions and flow based charging control. The UDM 573 manages network user data and can be paired with a user data repository (UDR) that stores user data such as customer profile information, customer authentication number, and encryption keys for the information. An application function 592, which may be located outside of the core network 558, exposes the application layer for interacting with the core network 558. In an embodiment, the application function 592 may be execute on an application server 559 located geographically proximate to the UE 552 in an "edge computing" deployment mode. The core network 558 can provide a network slice to a subscriber, for example an enterprise customer, that is composed of a plurality of 5G network functions that are configured to provide customized communication service for that subscriber, for example to provide communication service in accordance with communication policies defined by the customer. The NSSF 574 can help the AMF 576 to select the network slice instance (NSI) for use with the UE 552.

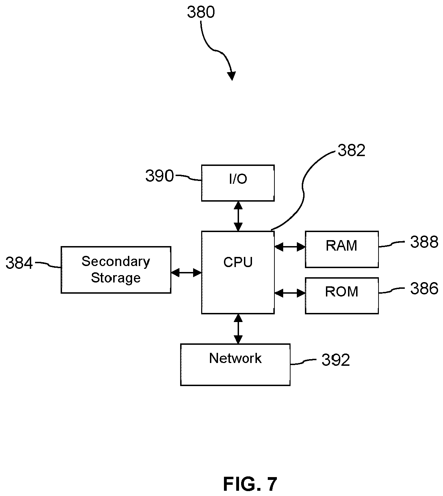

FIG. 7 illustrates a computer system 380 suitable for implementing one or more embodiments disclosed herein. The computer system 380 includes a processor 382 (which may be referred to as a central processor unit or CPU) that is in communication with memory devices including secondary storage 384, read only memory (ROM) 386, random access memory (RAM) 388, input/output (I/O) devices 390, and network connectivity devices 392. The processor 382 may be implemented as one or more CPU chips.

It is understood that by programming and/or loading executable instructions onto the computer system 380, at least one of the CPU 382, the RAM 388, and the ROM 386 are changed, transforming the computer system 380 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 380 is turned on or booted, the CPU 382 may execute a computer program or application. For example, the CPU 382 may execute software or firmware stored in the ROM 386 or stored in the RAM 388. In some cases, on boot and/or when the application is initiated, the CPU 382 may copy the application or portions of the application from the secondary storage 384 to the RAM 388 or to memory space within the CPU 382 itself, and the CPU 382 may then execute instructions that the application is comprised of. In some cases, the CPU 382 may copy the application or portions of the application from memory accessed via the network connectivity devices 392 or via the I/O devices 390 to the RAM 388 or to memory space within the CPU 382, and the CPU 382 may then execute instructions that the application is comprised of. During execution, an application may load instructions into the CPU 382, for example load some of the instructions of the application into a cache of the CPU 382. In some contexts, an application that is executed may be said to configure the CPU 382 to do something, e.g., to configure the CPU 382 to perform the function or functions promoted by the subject application. When the CPU 382 is configured in this way by the application, the CPU 382 becomes a specific purpose computer or a specific purpose machine.

The secondary storage 384 is typically comprised of one or more disk drives or tape drives and is used for non-transitory storage of data and as an over-flow data storage device if RAM 388 is not large enough to hold all working data. Secondary storage 384 may be used to store programs which are loaded into RAM 388 when such programs are selected for execution. The ROM 386 is used to store instructions and perhaps data which are read during program execution. ROM 386 is a non-transitory memory device which typically has a small memory capacity relative to the larger memory capacity of secondary storage 384. The RAM 388 is used to store volatile data and perhaps to store instructions. Access to both ROM 386 and RAM 388 is typically faster than to secondary storage 384. The secondary storage 384, the RAM 388, and/or the ROM 386 may be referred to in some contexts as computer readable storage media and/or non-transitory computer readable media.

I/O devices 390 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 392 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards, and/or other well-known network devices. The network connectivity devices 392 may provide wired communication links and/or wireless communication links (e.g., a first network connectivity device 392 may provide a wired communication link and a second network connectivity device 392 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In an embodiment, the radio transceiver cards may provide wireless communication links using protocols such as code division multiple access (CDMA), global system for mobile communications (GSM), long-term evolution (LTE), WiFi (IEEE 802.11), Bluetooth, Zigbee, narrowband Internet of things (NB loT), near field communications (NFC), and radio frequency identity (RFID). The radio transceiver cards may promote radio communications using 5G, 5G New Radio, or 5G LTE radio communication protocols. These network connectivity devices 392 may enable the processor 382 to communicate with the Internet or one or more intranets. With such a network connection, it is contemplated that the processor 382 might receive information from the network, or might output information to the network in the course of performing the above-described method steps. Such information, which is often represented as a sequence of instructions to be executed using processor 382, may be received from and outputted to the network, for example, in the form of a computer data signal embodied in a carrier wave.

Such information, which may include data or instructions to be executed using processor 382 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The processor 382 executes instructions, codes, computer programs, scripts which it accesses from hard disk, floppy disk, optical disk (these various disk based systems may all be considered secondary storage 384), flash drive, ROM 386, RAM 388, or the network connectivity devices 392. While only one processor 382 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 384, for example, hard drives, floppy disks, optical disks, and/or other device, the ROM 386, and/or the RAM 388 may be referred to in some contexts as non-transitory instructions and/or non-transitory information.

In an embodiment, the computer system 380 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 380 to provide the functionality of a number of servers that is not directly bound to the number of computers in the computer system 380. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third party provider. Some cloud computing environments may comprise cloud computing resources owned and operated by the enterprise as well as cloud computing resources hired and/or leased from a third party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid state memory chip, for example analog magnetic tape, compact disk read only memory (CD-ROM) disks, floppy disks, jump drives, digital cards, multimedia cards, and others. The computer program product may be suitable for loading, by the computer system 380, at least portions of the contents of the computer program product to the secondary storage 384, to the ROM 386, to the RAM 388, and/or to other non-transitory memory and volatile memory of the computer system 380. The processor 382 may process the executable instructions and/or data structures in part by directly accessing the computer program product, for example by reading from a CD-ROM disk inserted into a disk drive peripheral of the computer system 380. Alternatively, the processor 382 may process the executable instructions and/or data structures by remotely accessing the computer program product, for example by downloading the executable instructions and/or data structures from a remote server through the network connectivity devices 392. The computer program product may comprise instructions that promote the loading and/or copying of data, data structures, files, and/or executable instructions to the secondary storage 384, to the ROM 386, to the RAM 388, and/or to other non-transitory memory and volatile memory of the computer system 380.

In some contexts, the secondary storage 384, the ROM 386, and the RAM 388 may be referred to as a non-transitory computer readable medium or a computer readable storage media. A dynamic RAM embodiment of the RAM 388, likewise, may be referred to as a non-transitory computer readable medium in that while the dynamic RAM receives electrical power and is operated in accordance with its design, for example during a period of time during which the computer system 380 is turned on and operational, the dynamic RAM stores information that is written to it. Similarly, the processor 382 may comprise an internal RAM, an internal ROM, a cache memory, and/or other internal non-transitory storage blocks, sections, or components that may be referred to in some contexts as non-transitory computer readable media or computer readable storage media.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

Aspects of the present invention also reside in the following numbered clauses:
Clause 1. A system for ambient electromagnetic power harvesting (AEPH) chip location detection and tracking, comprising:
   an AEPH chip comprising:
      one or more antennas configured to receive radio frequency waves from a cell site associated with a carrier network, wherein the cell site is positioned at least one mile away from the AEPH chip, and wherein an object is coupled to the AEPH chip;
      one or more rectifier circuits coupled to the one or more antennas configured to convert the radio frequency waves into power as a direct current voltage;
      a power storage coupled to the one or more rectifiers circuits configured to store the power;
      a transceiver coupled to the power storage and configured to broadcast an identification signal using the power stored in the power storage in response to receiving the radio frequency waves from the cell site;
   a reader device comprising:
      a transceiver configured to receive the identification signal from the AEPH chip; and
      one or more processors coupled to the transceiver and configured to obtain a location of the AEPH chip,
      wherein the transceiver is further configured to transmit the location of the AEPH chip to a carrier network.
Clause 2. The system of clause 1, wherein, to obtain the location of the AEPH chip, the one or more processors are configured to determine the location of the AEPH chip based on known positions of one or more reader devices and round-trip delays of signals received from the one or more reader devices.
Clause 3. The system of clause 1, further comprising a location server, and wherein the transceiver is further configured to forward the identification signal to the location server, wherein the location server is configured to determine the location of the AEPH chip based on data received from a plurality of readers that picked up identification signals from the AEPH chip, and wherein the data comprises round-trip delays of signals received the plurality of readers.
Clause 4. The system of clause 1, wherein the transceiver of the AEPH chip is configured to receive the radio frequency waves over a frequency band of interest.
Clause 5. The system of clause 1, wherein the transceiver of the AEPH chip is configured to broadcast the identification signal periodically according to a predetermined scheduled or only in response to receiving the radio frequency waves from the cell site.
Clause 6. The system of clause 1, further comprising a user equipment configured to transmit a request for the location of an object to a carrier network.
Clause 7. The system of clause 1, wherein the location of the AEPH chip is determined based on signal strength of the identification signal, power signal delay from neighboring cells, round trip times of the identification signal, and time of arrival of identification signals.
Clause 8. A method of ambient electromagnetic power harvesting (AEPH) chip location detection and tracking, comprising:
   transmitting, by a client application at a user equipment, a request for a location of an object to a carrier network, wherein the object is coupled to the AEPH chip;
   receiving, by one or more antennas of the AEPH chip, radio frequency waves from a cell site associated with a carrier network after the request for the location of the object is transmitted to the carrier network, wherein the cell site is positioned a predefined distance away from the AEPH chip;
   converting, by one or more rectifier circuits of the AEPH chip, the radio frequency waves into power having a direct current voltage;
   storing the power in a power storage of the AEPH chip;
   broadcasting, by the AEPH chip, an identification signal using the power stored in the power storage in response to receiving the radio frequency waves from the cell site;
   receiving, by a reader device, the identification signal from the AEPH chip;
   forwarding, by the reader device to a location server, at least a portion of the identification signal to determine a location of the AEPH chip, wherein the location of the AEPH chip is transmitted to the user equipment as the location of the object.
Clause 9. The method of clause 8, wherein the location of the AEPH chip is based on known positions of one or more reader devices, a known position of the cell site, and round-trip delays of signals received from the one or more reader devices from the AEPH chip.
Clause 10. The method of clause 8, the location of the AEPH chip is based on data received from a plurality of readers that received identification signals from the AEPH chip, and wherein the data comprises round-trip delays of signals received the plurality of readers.
Clause 11. The method of clause 8, wherein the predefined distance is based on an area between the cell site and the AEPH chip and based on interfering elements between the cell site and the AEPH chip.
Clause 12. The method of clause 8, further comprising broadcasting, by the AEPH chip, the identification signal periodically according to a predetermined schedule in response to receiving the radio frequency waves from the cell site.
Clause 13. The method of clause 8, further comprising broadcasting, by the AEPH chip, the identification signal only once in response to receiving the radio frequency waves from the cell site.
Clause 14. The method of clause 13, further comprising storing, in a memory at the location server, a mapping between an identifier of the object and an identifier of the AEPH chip coupled to the object.
Clause 15. A method of ambient electromagnetic power harvesting (AEPH) chip location detection and tracking, comprising:
   receiving, by one or more antennas of the AEPH chip, radio frequency waves from a cell site associated with a carrier network after a request for a location of an object is transmitted to the carrier network, wherein the cell site is positioned at least one mile away from the AEPH chip;
   converting, by one or more rectifier circuits of the AEPH chip, the radio frequency waves into power as a direct current voltage;
   storing the power in a capacitor of the AEPH chip;
   broadcasting, by the AEPH chip, an identification signal using the power stored in the capacitor in response to receiving the radio frequency waves from the cell site;
   receiving, by a reader device, the identification signal from the AEPH chip;
   determining, by the reader device, a location of the AEPH chip; and
   transmitting, by the reader device to a user equipment, the location of the AEPH chip as the location of the object.
Clause 16. The method of clause 15, wherein the location of the AEPH chip is based on known positions of one or more reader devices, known positions of the cell site, and round-trip delays of signals received from the one or more reader devices.
Clause 17. The method of clause 15, the location of the AEPH chip is based on data received from a plurality of readers that received identification signals from the AEPH chip, and wherein the data comprises round-trip delays of signals received the plurality of readers.
Clause 18. The method of clause 15, wherein the radio frequency waves are received by the AEPH chip over a 47 GHz spectrum band.
Clause 19. The method of clause 15, further comprising broadcasting, by the AEPH chip, the identification signal periodically according to a predetermined schedule in response to receiving the radio frequency waves from the cell site.
Clause 20. The method of clause 15, further comprising broadcasting, by the AEPH chip, the identification signal only once in response to receiving the radio frequency waves from the cell site.

## Claims

1. A system for ambient electromagnetic power harvesting (AEPH) chip location detection and tracking, comprising:
an AEPH chip comprising:
one or more antennas configured to receive radio frequency waves from a cell site associated with a carrier network, wherein the cell site is positioned at least one mile away from the AEPH chip, and wherein an object is coupled to the AEPH chip;
one or more rectifier circuits coupled to the one or more antennas configured to convert the radio frequency waves into power as a direct current voltage;
a power storage coupled to the one or more rectifiers circuits configured to store the power;
a transceiver coupled to the power storage and configured to broadcast an identification signal using the power stored in the power storage in response to receiving the radio frequency waves from the cell site;
a reader device comprising:
a transceiver configured to receive the identification signal from the AEPH chip; and
one or more processors coupled to the transceiver and configured to obtain a location of the AEPH chip,
wherein the transceiver is further configured to transmit the location of the AEPH chip to a carrier network.

2. The system of claim 1, wherein, to obtain the location of the AEPH chip, the one or more processors are configured to determine the location of the AEPH chip based on known positions of one or more reader devices and round-trip delays of signals received from the one or more reader devices.

3. The system of claim 1, further comprising a location server, and wherein the transceiver is further configured to forward the identification signal to the location server, wherein the location server is configured to determine the location of the AEPH chip based on data received from a plurality of readers that picked up identification signals from the AEPH chip, and wherein the data comprises round-trip delays of signals received the plurality of readers.

4. The system of claim 3, wherein in a memory at the location server, a mapping between an identifier of the object and an identifier of the AEPH chip coupled to the object is stored.

5. The system of claim 1, wherein the transceiver of the AEPH chip is configured to receive the radio frequency waves over a frequency band of interest.

6. The system of claim 1, wherein the transceiver of the AEPH chip is configured to broadcast the identification signal periodically according to a predetermined scheduled or only in response to receiving the radio frequency waves from the cell site.

7. The system of claim 1, wherein the transceiver of the AEPH chip is configured to broadcast the identification signal only once in response to receiving the radio frequency waves from the cell site.

8. The system of claim 1, further comprising a user equipment configured to transmit a request for the location of an object to a carrier network.

9. The system of claim 1, wherein the location of the AEPH chip is determined based on signal strength of the identification signal, power signal delay from neighboring cells, round trip times of the identification signal, and time of arrival of identification signals.

10. A method of ambient electromagnetic power harvesting (AEPH) chip location detection and tracking, comprising:
receiving, by one or more antennas of the AEPH chip, radio frequency waves from a cell site associated with a carrier network after a request for a location of an object is transmitted to the carrier network, wherein the cell site is positioned at least one mile away from the AEPH chip;
converting, by one or more rectifier circuits of the AEPH chip, the radio frequency waves into power as a direct current voltage;
storing the power in a capacitor of the AEPH chip;
broadcasting, by the AEPH chip, an identification signal using the power stored in the capacitor in response to receiving the radio frequency waves from the cell site;
receiving, by a reader device, the identification signal from the AEPH chip;
determining, by the reader device, a location of the AEPH chip; and
transmitting, by the reader device to a user equipment, the location of the AEPH chip as the location of the object.

11. The method of claim 10, wherein the location of the AEPH chip is based on known positions of one or more reader devices, known positions of the cell site, and round-trip delays of signals received from the one or more reader devices.

12. The method of claim 10, the location of the AEPH chip is based on data received from a plurality of readers that received identification signals from the AEPH chip, and wherein the data comprises round-trip delays of signals received the plurality of readers.

13. The method of claim 10, wherein the radio frequency waves are received by the AEPH chip over a 47 GHz spectrum band.

14. The method of claim 10, further comprising broadcasting, by the AEPH chip, the identification signal periodically according to a predetermined schedule in response to receiving the radio frequency waves from the cell site.

15. The method of claim 10, further comprising broadcasting, by the AEPH chip, the identification signal only once in response to receiving the radio frequency waves from the cell site.
